# EUROPÄISCHE PATENTSCHRIFT

(11) **EP 0 342 326 B1**
(45) Veröffentlichungstag und Bekanntmachung des Hinweises auf die Patenterteilung: **03.02.1993**
(21) Anmeldenummer: 89104043.8
(22) Anmeldetag: 08.03.1989
(51) Int. Cl.: B60T 13/52

(54) **Halterbefestigung an einer druckmittelbetätigten Baugruppe**
Bracket mounting on a pressure-actuated assembly
Attache de support d'un assemblage commandé par un fluide

(30) Priorität: 20.05.1988 DE 3817207
(43) Veröffentlichungstag der Anmeldung: 23.11.1989
(73) Patentinhaber: ALFRED TEVES GmbH, 60441 Frankfurt (DE)
(72) Erfinder: Bischoff, Gilbert, D-6234 Hattersheim 1 (DE); Kirchner, Wolfgang, D-6236 Eschborn (DE); Emmel, Eckhard, D-6303 Hungen 11 (DE)
(74) Vertreter: Portwich, Peter

(56) Entgegenhaltungen:
- FR-A- 694 882
- GB-A- 2 017 852

## Beschreibung

Die Zahl elektrischer und elektronischer Baugruppen in Kraftfahrzeugen nimmt immer mehr zu. Dabei wächst auch die Anzahl der auf Baugruppen innerhalb des Motorraums einwirkenden elektrischen Schaltkreise, so daß diese Schaltkreise entweder innerhalb des Motorraums selber angeordnet werden müssen oder zumindest von diesen Schaltkreisen ausgehende Leitungen innerhalb des Motorraums verlegt werden müssen. Gleichzeitig wird eine immer kompaktere Bauweise der Kraftfahrzeuge gefordert, und es besteht weiterhin die Gefahr, daß durch thermische oder mechanische Beanspruchung (etwa bei Wartungsarbeiten) sowie durch chemische Beanspruchung (Säuren, Öle) die elektrischen Baukreise oder Zuleitungen angegriffen bzw. zerstört werden. Damit reduzieren sich die Befestigungsmöglichkeiten für elektrische Bauteile oder Zuleitungen innerhalb des Motorraums erheblich.

Zur Führung einer elektrischen Zuleitung ist es bekannt, zusammen mit einem Hauptzylinder gleichzeitig einen aus Metall bestehenden Bügel an dem Bremskraftverstärker eines Kraftfahrzeugs anzuschrauben. Eine derartige Halterbefestigung ist aber verhältnismäßig teuer.

Aus der GB-A-20 17 852 ist es bekannt, an dem Gehäuse eines Bremskraftverstärkers ein Halteblech anzuschweißen, mit dem dieser Bremskraftverstärker gegenüber dem Chassis des Kraftfahrzeugs befestigt wird.

Die vorliegende Erfindung geht daher aus von einer Halterbefestigung, wie sie in dem Oberbegriff des Hauptanspruchs beschrieben ist und hat sich zur Aufgabe gestellt, eine preiswerte Befestigung der genannen Gattung anzugeben.

Die Aufgabe wird durch die aus dem kennzeichnenden Teil des Hauptanspruchs beschriebene Merkmalskombination gelöst. Die Erfindung besteht im Prinzip also darin, den ohnedies für eine druckmittelbetätigte Baugruppe benötigen Druckmittelanschluß gleichzeitig zur Befestigung eines Halters mit auszunutzen, so daß die Befestigung des Druckmittelanschlusses zusätzlich noch zur Befestigung des Halters für elektrische Schaltkreise oder Leitungen dient.

Soweit man für den Druckmittelanschluß einen Dichtstopfen verwendet, kann sich eine Merkmalskombination nach Anspruch 2 für die Weiterbildung der Erfindung empfehlen. Eine derartige Merkmalskombination ist beispielsweise dann empfehlenswert, wenn der Dichtstopfen eine vorsorglich in der druckmttelbetätigten Baugruppe vorgesehene Öffnung verschließt.

Dabei empfiehlt sich insbesondere eine Merkmalskombination nach Anspruch 3, wobei hinsichtlich der Nut des Dichtstopfens dafür Sorge getragen werden muß, daß deren Höhe die zusätzliche Aufnahme des Halters hinsichtlich seiner Materialstärke berücksichtigt.

Soweit hinsichtlich der druckmittelbetätigten Baugruppe ein deren Gehäuse durchdringender Anschlußstutzen vorgesehen ist, empfiehlt sich in Weiterbildung der Erfindung eine Merkmalskombination nach Anspruch 4. Ist die Gehäusebohrung zu Dichtungszwecken zusätzlich noch mit einem Dichtstopfen versehen, so erhält man durch Anwendung der Merkmalskombination nach Anspruch 5 den Vorteil, daß jetzt der Halter zwischen Dichtstopfen und Anschlußstutzen im Abstand zu dem Gehäuse gehalten ist. Soweit beide Anschlüsse oder zumindest der Dichtstopfen aus Kunststoff bzw. Gummi bestehen, erhält man hierdurch eine gegenüber dem Gehäuse elektrisch isolierte Befestigung des Halters. Die Merkmalskombination nach Anspruch 6 trägt zu einer Sicherung und damit einer besonders festen Verankerung der Halterung in dem Gehäuse bei.

Durch die Verwendung einer Merkmalskombination nach Anspruch 7 wird die dichtende Wirkung des Kunststoffs gegenüber dem Druckmittel gleichzeitig noch mit der elektrisch isolierenden Wirkung des Kunststoffs ausgenutzt. Darüberhinaus läßt sich im gewissen Umfang die Befestigung der Halterung lösbar ausgestalten, so daß an dem Halter befestigte elektrische Schaltungen leicht ausgewechselt werden können.

Aus Gründen der elektrischen Leitfähigkeit, aber auch Preiswürdigkeit des Materials kann sich eine Merkmalskombintion nach Anspruch 8 empfehlen. Dabei kann der Halter gemäß Anspruch 9 nicht nur zur Aufnahme einer Leitungsführung oder eines elektrischen Schaltkreises selbst, sondern auch zur Aufnahme von zwischengechalteten entsprechenden Befestigungsgliedern, wie beispielsweise Befestigungslaschen oder Befestigungssockeln, dienen.

Um den Halter gegen ein Verdrehen an der Gehäusebefestigung zu sichern, empfiehlt sich eine Merkmalskombination nach Anspruch 10, wobei durch die federnde Sicherung weniger auf die Maßtoleranzen des Gehäuses Rücksicht genommen werden muß.

Für eine schwere Belastung der Halterung empfiehlt sich eine Merkmalskombination nach Anspruch 11, da hier der entsprechende Teil des Gehäuses nicht durch hohen Druck belastet ist.

Ein Ausführungsbeispiel der Erfindung wird nachfolgend anhand der Zeichnung erläutert. Darin zeigt
- Fig. 1: in geschnittener Seitenansicht ein erstes Ausführungsbeispiel eines erfindungsgemäßen Halters,
- Fig. 2: in Draufsicht den Halter nach Fig. 2,
- Fig. 3: in Draufsicht ein zweites Ausführungsbeispiel eines erfindungsgemäßen Halters,
- Fig. 4: in geschnittener Frontansicht den Halter nach Fig. 3,
- Fig. 5: in geschnittener Seitenansicht den Halter nach Fig. 3,
- Fig. 6: die Befestigung des Halters nach Fig. 1 und 2 in einem Gehäuse mittels eines Dichtstopfens und
- Fig. 7: die Befestigung des Halters nach Fig. 1 und 2 in einem Gehäuse mittels Dichtstopfen und Anschlußstutzen.

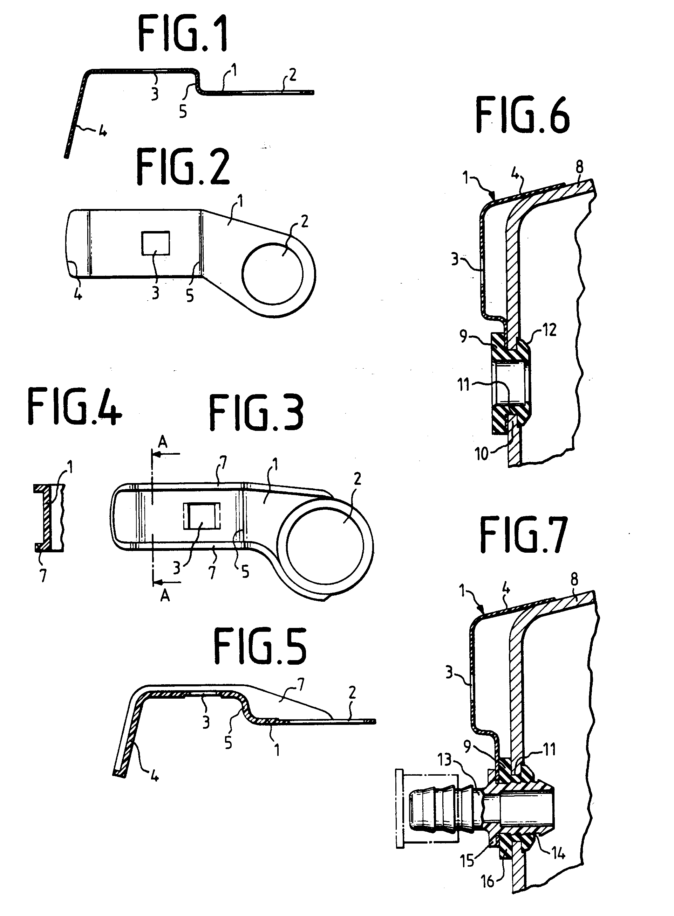

Aus Fig. 1 ist ein Halter 1 zu erkennen, der eine Befestigungsöffnung 2 besitzt. Das von der Befestigungsöffnung 2 abgewandte Ende des Halters 1 trägt eine rechteckige Ausnehmung 3, die zur Aufnahme eines Sockels für elektrische Schaltungen, einer Leitungsklemme oder eines elektrischen Schaltkreises dient. Das Ende des Halters 1 ist noch mit einer im wesentlichen rechteckig abgebogenen Lasche 4 versehen, die sich an einer parallel oder geneigt zum Halter laufenden Fläche des Gehäuses abstützen kann und damit den Halter 1 gegen Verdrehen in seinem Befestigungssitz sichert.

Aus Gründen der leichteren Befestigung oder als Schutz vor Wärmebeeinflussung besitzt der Halter 1 ein Abstandsstück 5, durch welches bei der Befestigung (beispielsweise gemäß Fig. 6 oder 7) die Ausnehmung 3 im Abstand zu dem Gehäuse gehalten wird.

Die Fig. 3 bis 5 zeigen einen den Fig. 1 und 2 entsprechenden Halter in Kunststoffausführungen. Gleiche Bauteile sind dementsprechend mit gleichen Bezugszeichen versehen. Zu Zwecken der Versteifung besitzt der Kunststoffhalter einen längs seines Randes verlaufenden und sich senkrecht zum Halter erstreckenden Randansatz 7. Fig. 4 zeigt einen Schnitt in Frontansicht, der in der Höhe Verbindungslinie A-A geführt wurde.

Aus Fig. 6 ist die Befestigung des Halters gemäß Fig. 1 und 2 an einem Gehäuse 8 eines Bremskraftverstärkers mittels eines Dichtstopfens 9 gezeigt. Der aus Gummi bestehende Dichtstopfen 9 besitzt an seiner Mantelfläche eine umlaufende Nut 10, in die die Ränder der Befestigungsöffnung 2 sowie einer Gehäuseöffnung 11 ragen. Der Gehäusestopfen 9 wird derart mit dem aus Metall bestehenden Gehäuse 8 und dem Halter 1 verbunden, daß die beiden Öffnungen 2 und 11 miteinander zum Fluchten gebracht werden und danach der Dichtstopfen 9 über die umlaufende Anphasung 12 in die fluchtenden Öffnungen eingepreßt wird, bis die umlaufende Nut die Öffnungsränder umfaßt. Dabei legen sich die Seitenwände der Nut 10 an die Ränder der Öffnungen 2,11 an und pressen sie gegeneinander, so daß der Halter 1 am Gehäuse 8 gehalten wird. Dabei kann vorteilhafterweise der Halter 1 auch die Ausgestaltung nach den Fig. 3 bis 5 haben und aus Kunststoff gebildet sein, so daß die Ausnehmung 3 zu einem elektrisch isolierten Halter gehört, der besonders zur Aufnahme elektrischer Schaltkreise geeignet ist.

Fig. 7 zeigt eine weitere zweckmäßige Ausgestaltung der erfindungsgemäßen Halterbefestigung, bei der wiederum ein Dichtstopfen 9 aus Kunststoff in eine Gehäuseöffnung 11 eingepreßt ist. Die Abweichung gegenüber Fig. 6 besteht nun im wesentlichen darin, daß in den Dichtstopfen 9 ein Anschlußstutzen 13 eingepreßt ist. An dem Anschlußstutzen 13 vorgesehene umlaufende Sägezahnansätze 14 hindern ein Herauswandern des Stutzens 13 entgegen der Befestigungsrichtung. Eine entsprechende Ausgestaltung besitzt der Anschlußstutzen 13 auf der dem Gehäuse 8 abgewandten Seite, so daß auf dieses Ende des Stutzens, wie in der Zeichnung angedeutet, eine Verschlußkappe oder eine Zuleitung aufgeschoben werden kann.

Wichtig ist nun, daß die Ausnehmung 2 des Halters 1 zwischen einem umlaufenden Ansatz 15 des Stutzens 13 und einem umlaufenden Ansatz 16 des Stopfens eingepreßt ist, so daß dieses Ende des Halters vollkommen in Kunststoff eingebettet und damit eine elektrisch nicht leitende Aufhängung erhält. Soweit der Halter nicht an einer anderen Stelle am Metallgehäuse abgestützt ist, kann somit auch der Halter aus Metall bestehen und eine elektrisch abgeriegelte Aufnahmefläche für einen elektrischen Schaltkreis bilden.

Damit wird in einfacher Weise die ohnedies notwendige Befestigung eines oder mehrerer Kunststoffteile an einem Gehäuse, beispielsweise an der Vakuumansaugöffnung eines Bremskraftverstärkers in einem Automobil noch zusätzlich für die Befestigung einer Halteplatte zum Halten von elektrischen Baugruppen oder elektrischen Leitungen ausgenutzt.

## Patentansprüche

1. Halterbefestigung eines Halters (1) für elektrische Bauelemente am Gehäuse (8) einer druckmittelbetätigten Baugruppe, insbesondere Bremskraftverstärker eines Kraftfahrzeugs, dadurch **gekennzeichnet,** daß der Halter (1) gemeinsam mit einem Druckmittelanschluß (9) bzw. (9 und 13) an dem Gehäuse (8) befestigt ist.

2. Halterbefestigung nach Anspruch 1, dadurch **gekennzeichnet,** daß der Halter (1) gemeinsam mit einem Dichtstopfen (9) am Gehäuse (8) befestigt ist.

3. Halterbefestigung nach Anspruch 2, dadurch **gekennzeichnet,** daß der Dichtstopfen (9) eine ringförmige Nut (10) besitzt, die dichtend den Rand einer Gehäuseöffnung (11) zusammen mit dem Rand einer Befestigungsöffnung (2) des Halters (1) umfaßt.

4. Halterbefestigung nach Anspruch 1, dadurch **gekennzeichnet,** daß ein mit einem ringförmigen Anschlag (15) versehener Anschlußstutzen (13) mit seinem gehäuseseitigen Ende durch eine Befestigungsöffnung (2) des Halters (1) ragt und durch Einpressen in eine Gehäusebohrung (11) in dem Gehäuse (8) verankert ist, wobei der Halter (1) durch den ringförmigen Anschlag (15) an dem Gehäuse (8) gehalten ist.

5. Halterbefestigung nach Anspruch 4, dadurch **gekennzeichnet,** daß die Gehäusebohrung (11) durch einen ringförmigen Dichtstopfen (9) eingefaßt ist, der das gehäuseseitige Ende des Anschlußstutzens (13) aufnimmt, wobei der Halter (1) durch den ringförmigen Anschlag (15) gehalten ist, welcher den Halter (1) gegen den Dichtstopfen (9) preßt.

6. Halterbefestigung nach Anspruch 4 oder 5, dadurch **gekennzeichnet,** daß das gehäuseseitige Ende des Anschlußstutzens (13) umlaufende, sägezahnförmige ringförmige Ansätze (14) aufweist.

7. Halterbefestigung nach einem der Ansprüche 1 bis 6, dadurch **gekennzeichnet,** daß der Anschlußstutzen (13) und /oder Dichtstopfen (9) aus einem elektrisch nicht leitenden Material, vorzugsweise Kunststoff ist.

8. Halterbefestigung nach einem der Ansprüche 1 bis 7, dadurch **gekennzeichnet,** daß der Halter (1) aus einem elektrisch nicht leitenden Material, vorzugsweise Kunststoff ist.

9. Halterbefestigung nach einem der Ansprüche 1 bis 8, dadurch **gekennzeichnet,** daß auf dem Halter (1) eine Ausnehmung (3) zur Aufnahme einer Leitungsführung oder einer Leiterplattenhalterung dient.

10. Halterbefestigung nach einem der Ansprüche 1 bis 9, dadurch **gekennzeichnet,** daß der Halter (1) an dem der Befestigungsöffnung (2) abgewandten Ende eine von der Halterfläche im wesentlichen senkrecht abstehende federnde Lasche (4) aufweist, die sich am Gehäuse (8) abstützt und den Halter (1) gegen eine Drehbewegung gegenüber dem Gehäuse (8) sichert.

11. Halterbefestigung nach einem der Ansprüche 1 bis 10, dadurch **gekennzeichnet,** daß der Druckmittelanschluß (9,13) durch den Vakuumanschluß eines Bremskraftverstärkers (8) gebildet ist.

## Claims

1. A means for fixing a holder (1) for electric components to the housing (8) of a hydraulic fluid-actuated assembly, in particular of the brake power booster of an automotive vehicle, **characterized** in that the holder (1) is fixed to the said housing (8) jointly with a hydraulic fluid connection (9), respectively (9 and 13).

2. A means for fixing a holder as claimed in claim 1, **characterized** in that the said holder (1) is fixed to the said housing (8) jointly with a sealing plug (9).

3. A means for fixing a holder as claimed in claim 2, **characterized** in that the said sealing plug (9) is furnished with a circular groove (10) which tighteningly embraces the edge of a housing opening (11) together with the edge of a fixing opening (2) of the said holder (1).

4. A means for fixing a holder as claimed in claim 1, **characterized** in that a connecting nozzle (13) being provided with a ring-shaped stop (15) projects with its housing-side end through a said fixing opening (2) of the said holder (1) and is anchored in the said housing (8) by forcing it into a said housing bore (11), the said holder (1) being retained at the said housing (8) by the said ring-shaped stop (15).

5. A means for fixing a holder as claimed in claim 4, **characterized** in that the said housing bore (11) is surrounded by a said ring-shaped sealing plug (9) which accommodates the housing-side end of the said connecting nozzle (13), the said holder (1) being retained by the said ring-shaped stop (15) which urges said holder (1) against the said sealing plug (9).

6. A means for fixing a holder as claimed in claim 4 or in claim 5, **characterized** in that the housing-side end of the said connecting nozzle (13) presents annular saw-tooth shaped projections (14) in circumferential direction.

7. A means for fixing a holder as claimed in anyone of claims 1 to 6, **characterized** in that the said connecting nozzle (13) and/or the said sealing plug (9) are made of an electrically nonconductive material, preferably of plastic.

8. A means for fixing a holder as claimed in anyone of claims 1 to 7, **characterized** in that the said holder (1) is made of an electrically nonconductive material, preferably of plastic.

9. A means for fixing a holder as claimed in anyone of claims 1 to 8, **characterized** in that a recess (3) on the said holder (1) serves to accommodate a line guide element or a retaining element for a printed circuit board.

10. A means for fixing a holder as claimed in anyone of claims 1 to 9, **characterized** in that at its end facing away from the said fixing opening (2) the said holder (1) is furnished with a spring strip (4) which projects from the surface of the said holder (1) substantially in vertical direction and which takes support at the said housing (8) and secures the said holder (1) against a twisting movement with respect to the said housing (8).

11. A means for fixing a holder as claimed in anyone of claims 1 to 10, **characterized** in that the said hydraulic fluid connection (9, 13) is formed by the vacuum connection of a said brake power booster (8).

## Revendications

1. Dispositif de fixation d'un support (1) pour éléments structurels électriques, sur le boîtier (8) d'un ensemble structurel actionné par un agent de pression, notamment l'amplificateur d'effort de freinage d'un véhicule automobile, caractérisé en ce que le support (1) est fixé sur le boîtier (8) en commun avec un raccord d'agent de pression (9) ou (9 et 13).

2. Dispositif de fixation de support suivant la revendication 1, caractérisé en ce que le support (1) est fixé sur le boîtier (8) en commun avec un tampon d'étanchéité (9).

3. Dispositif de fixation de support suivant la revendication 2, caractérisé en ce que le tampon d'étanchéité (9) comporte une gorge annulaire (10) qui entoure de manière étanche le bord d'une ouverture (11) du boîtier en même temps que le bord d'une ouverture de fixation (2) du support (1).

4. Dispositif de fixation de support suivant la revendication 1, caractérisé en ce qu'un embout de raccordement (13), pourvu d'une butée annulaire (15), pénètre, par son extrémité située du côté du boîtier, dans une ouverture de fixation (2) du support (1) et est ancré dans le boîtier (8) par introduction à force dans un perçage (11) de ce boîtier, le support (1) étant maintenu sur le boîtier (8) par la butée annulaire (15).

5. Dispositif de fixation de support suivant la revendication 4, caractérisé en ce que le perçage (11) du boîtier reçoit, d'une manière emboîtée, un tampon annulaire d'étanchéité (9) qui reçoit l'extrémité de l'embout de raccordement (13) qui est située du côté du boîtier, le support (1) étant maintenu par la butée annulaire (15) qui applique ce support (1) en appui sur le tampon d'étanchéité (9).

6. Dispositif de fixation de support suivant la revendication 4 ou 5, caractérisé en ce que l'extrémité de l'embout de raccordement (13) qui est située du côté du boîtier comporte des saillies périphériques annulaires en forme de dents de scie (14).

7. Dispositif de fixation de support suivant l'une des revendications 1 à 6, caractérisé en ce que l'embout de raccordement (13) et/ou le tampon d'étanchéité (9) sont en une matière non conductrice de l'électricité, de préférence en matière plastique.

8. Dispositif de fixation de support suivant l'une des revendications 1 à 7, caractérisé en ce que le support (1) est en une matière non conductrice de l'électricité, de préférence en matière plastique.

9. Dispositif de fixation de support suivant l'une des revendications 1 à 8, caractérisé en ce que, sur le support (1), un évidement (3) sert à recevoir un passage de câble ou un support de plaquette à circuits imprimés.

10. Dispositif de fixation de support suivant l'une des revendications 1 à 9, caractérisé en ce que le support (1) comporte, à son extrémité opposée à l'ouverture de fixation (2), une patte élastique (4) qui s'écarte d'une manière pratiquement perpendiculaire de la surface du support et qui prend appui sur le boîtier (8) et immobilise le support (1) contre tout déplacement en rotation vis-à-vis de ce boîtier (8).

11. Dispositif de fixation de support suivant l'une des revendications 1 à 10, caractérisé en ce que le raccord d'agent de pression (9, 13) est constitué par lé raccord de dépression d'un amplificateur d'effort de freinage (8).
